# EUROPÄISCHE PATENTSCHRIFT

(11) **EP 1 285 296 B1**
(45) Veröffentlichungstag und Bekanntmachung des Hinweises auf die Patenterteilung: **22.09.2004**
(21) Anmeldenummer: 01927617.9
(22) Anmeldetag: 27.03.2001
(51) Int. Cl.: G02B 6/38, G02B 6/255

(54) **EINRICHTUNG ZUR KLAPPENBETÄTIGUNG BEI LICHTWELLENLEITER-SPLEISSGERÄTEN**
DEVICE FOR ACTUATING THE FLAP OF OPTICAL WAVEGUIDE SPLICERS
DISPOSITIF PERMETTANT D'ACTIONNER LES VOLETS D'UN APPAREIL D'EPISSURE DE GUIDES D'ONDES OPTIQUES

(30) Priorität: 05.04.2000 DE 10017008
(43) Veröffentlichungstag der Anmeldung: 26.02.2003
(73) Patentinhaber: Siemens Aktiengesellschaft, 80333 München (DE)
(72) Erfinder: KRAUSE, Dieter, 82449 Uffing am Staffelsee (DE); BRUGGER, Rudolf, 82178 Puchheim (DE)
(86) Internationale Anmeldenummer: PCT/DE2001/001172
(87) Internationale Veröffentlichungsnummer: WO 2001/077728

(56) Entgegenhaltungen:
- WO-A-96/05528
- DE-A- 4 006 799
- US-A- 5 170 456
- US-A- 5 546 491

## Beschreibung

Die vorliegende Erfindung betrifft eine Einrichtung zur Klappenbetätigung bei einem Lichtwellenleiter-Spleissgerät nach dem Oberbegriff des Patentanspruches 1.

Aus der WO 96 05528 A ist ein Lichtwellenleiter-Spleissgerät bekannt, bei dem eine V-förmige Nut vorgesehen ist, in welche zwei miteinander zu verspleissende Lichtwellenleiter koaxial eingelegt werden können. Zur Fixierung der Lichtwellenleiter in der Nut dient eine schwenkbare Abdeckung, an welcher zwei Klammern ausgebildet sind. Die beiden Klammern sind derart angeordnet, dass jeweils eine Klammer ein Lichtwellenleiter-Ende in die Nut drückt, wenn sich die Abdeckung in der geschlossenen Position befindet.

Es sind auch mikroprozessorgesteuerte Spleissgeräte bekannt, die zum Herstellen mechanisch fester, langzeitstabiler und dämpfungsarmer Verbindungen von Lichtwellenleitern dienen. Dabei werden die Enden zweier in Bezug aufeinander exakt ausgerichteter Fasern mit der Hilfe eines zwischen zwei Elektroden erzeugten Lichtbogens verschweißt. Die Faserpositionierung und der Schweißvorgang laufen automatisch ab, weshalb gleichbleibend gute Ergebnisse unabhängig vom Bediener gewährleistet werden.

Derartige, zumeist tragbare Geräte (vgl. US 6002827 A) werden zum Verschweißen von Lichtwellenleitern vor Ort verwendet.

Diese Spleissgeräte umfassen zur Aufnahme und Halterung der Lichtwellenleiter am Spleissgerät verschiedene Klappen, die vom Bediener einzeln zu betätigen sind. Im einzelnen umfassen diese Klappen eine rechte LID (Local Injection and Dedection)-Klappe, eine rechte und linke Halteklappe und eine Windschutzklappe. Zum Einlegen einer Faser, beispielsweise der rechten Faser, wird diese in eine rechte Faserführung eingelegt, sodass sie zum Spleissort hin vorsteht, und wird die rechte Halteklappe durch Drehen um eine Achse geschlossen. Die rechte Faser wird dann in der rechten Faserführung festgehalten. Anschließend wird die rechte LID-Klappe geschlossen, sodass die rechte Faser in einer unter der rechten LID-Klappe vorhandenen Nut festgehalten wird. Auf der linken Seite wird entsprechend verfahren. Wenn die rechte und linke Halteklappe und die rechte und linke LID-Klappe geschlossen sind, wird die Windschutzklappe durch Drehen um eine Achse über die rechte und linke Halteklappe verdreht und geschlossen, wobei die Windschutzklappe beim Arbeiten vor Ort einen Schutz vor Wind bietet, der den an Spleissort zwischen zwei Elektroden erzeugten Lichtbogen verschieben und stören könnte. In der Windschutzklappe befindet sich eine Beleuchtungseinheit, mit deren Hilfe ein Bild des Spleissortes erzeugt und auf einem Monitor abgebildet wird. Nach dem Spleissvorgang werden die genannten Klappen zur Entfernung des verschweißten Lichtwellenleiters und zum Einlegen neuer Fasern einzeln geöffnet.

Die Aufgabe der vorliegenden Erfindung besteht darin, eine Einrichtung zur Klappenbetätigung eines Lichtwellenleiter-Spleissgerätes der zuvor genannten Art zu schaffen, mit deren Hilfe die Klappenbetätigung wesentlich erleichtert wird.

Diese Aufgabe wird mit einer Einrichtung zur Klappenbetätigung eines Lichtwellenleiter-Spleissgerätes gelöst, die die Merkmale des Patentanspruches 1 aufweist.

Der wesentliche Vorteil der vorliegenden Erfindung besteht darin, dass ein Bediener bei der Ausführung von Spleissoperationen die Klappen eines Spleissgerätes, nämlich die rechte und linke LID-Klappe, die rechte und linke Halteplatte und die Windschutzklappe wesentlich einfacher, d.h. mit nur wenigen Handgriffen, und schneller bedienen kann als dies bei dem bekannten Spleissgeräten der Fall ist. Dabei ist dafür Sorge getragen, dass die Klappen wahlweise einzeln oder gleichzeitig geöffnet und geschlossen werden können. Während bei den bekannten Spleissgeräten die genannten Klappen einzeln in einer bestimmten Reihenfolge geöffnet und geschlossen werden müssen, werden bei der erfindungsgemäßen Einrichtung beim Öffnen der Windschutzklappe die rechte und linke Halteklappe und die rechte und linke LID-Klappe automatisch mit betätigt und in den jeweils geöffneten Zustand gebracht. Aus dem geöffneten Zustand kann dann jede Klappe der rechten und linken Halteklappe zum Fixieren einer neuen rechten bzw. linken Faser in einer Faserführung geschlossen werden und danach jede der rechten und linken LID-Klappe zur Halterung der rechten bzw. der linken Faser in der unter der rechten bzw. linken LID-Klappe befindlichen Nut und zur Ausführung einer Dämpfungsmessung geschlossen werden. Beim nachfolgenden Schliessen der Windschutzklappe vor Ausführung der Spleissoperation wird die Windschutzklappe automatisch wieder an der rechten und linken Halteklappe zur Ausführung der nächsten Öffnungsoperation verriegelt.

Vorteilhafte Ausgestaltungen der Erfindung gehen aus den Unteransprüchen hervor.

Im folgenden werden die Erfindung und deren Ausgestaltung im Zusammenhang mit den Figuren näher erläutert. Es zeigen
- FIG 1: den Aufbau eines vorliegenden Spleissgerätes;
- FIG 2: in gesonderter Darstellung die rechte und linke Halteklappe, die rechte und linke LID-Klappe und die Windschutzklappe des Spleissgerätes der Figur 1 zur Erläuterung der erfindungsgemäßen Einrichtung; und
- FIG 3: in schematischer Darstellung den Aufbau und die Anordnung eines Hakenteiles an der Windschutzklappe.

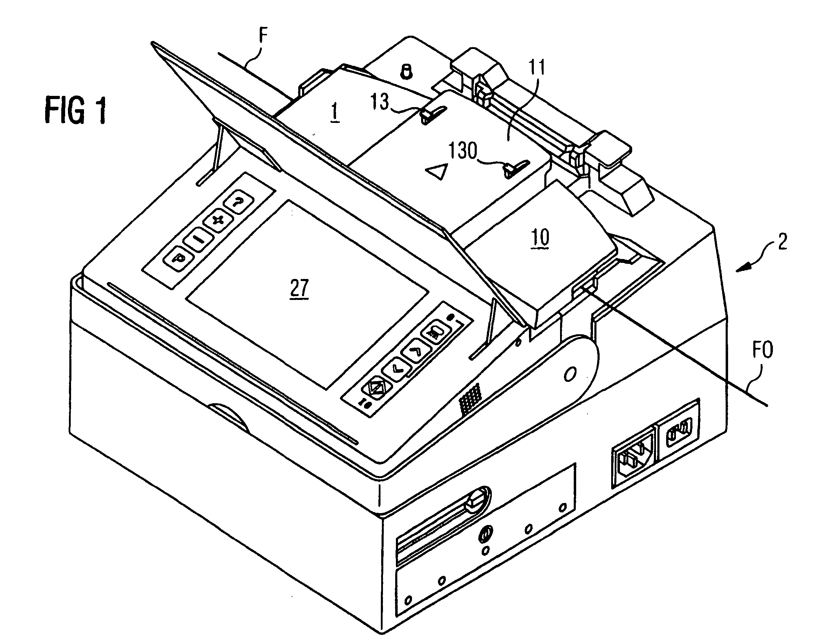

In der FIG 1 ist das Spleissgerät für Lichtwellenleiter mit der vorliegenden Einrichtung zur Betätigung der Klappen mit 2 bezeichnet. Das Spleissgerät 2 wird im Hinblick auf die Faserpositionierung und den eigentlichen Schweißvorgang voll elektronisch gesteuert, wobei der Spleissort an einem Monitor 27 dargestellt wird. Die durch die vorliegende Einrichtung betätigten Klappen umfassen eine linke LID-Klappe 1, eine rechte LID-Klappe 10, eine linke Halteplatte 5 und eine rechte Halteplatte 50, die in der FIG 1 nicht sichtbar sind, und eine Windschutzklappe 11. Zum Spleissen wird dem Spleissgerät 2 ein rechter Lichtwellenleiter bzw. eine rechte Faser F0 und ein linker Lichtwellenleiter bzw. eine linke Faser F zugeführt.

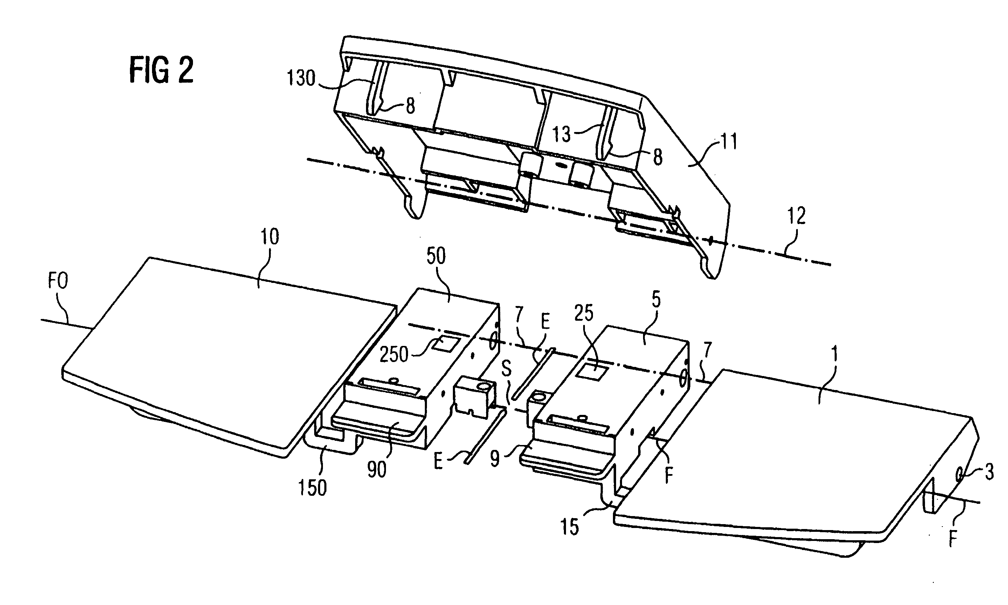

Gemäß FIG 2, die die Anordnung der einzelnen, zuvor genannten Klappen zeigt, wobei die Windschutzklappe 11 unabhängig von den Halteplatten 5, 50 und den LID-klappen 1, 10 geöffnet ist, sind die linke Halteklappe 5 und die linke LID-Klappe 1 auf der einen Seite und die rechte Halteklappe 50 und die rechte LID-Klappe 10 auf der anderen Seite des Spleissortes S angeordnet. Das Verschweißen der Faserenden erfolgt durch einen Lichtbogen, der mit der Hilfe von Elektroden E am Spleissort S erzeugt wird.

Die Halteklappen 5 und 50 sind am Spleissgerät 2 um eine gemeinsame Drehachse 7 zwischen dem in der FIG 2 dargestellten geschlossenen Zustand und einem geöffneten Zustand verschwenkbar, in dem sie um einen Öffnungswinkel von etwa 95° nach oben verschwenkt sind. Unterhalb jeder Halteplatte 5, 50 befindet sich eine Faserführung (nicht dargestellt), in der die Faser F bzw. F0 in sich nach oben öffnenden, V-förmigen Nuten gehalten wird, die in einer Richtung parallel zur Drehachse 7 voneinander beabstandet sind und beim Schließen der Halteklappen zum Festspannen der Faser F bzw. F0 von der Halteklappe 5 bzw. 50 verschlossen werden, wobei die Faserenden über die Halteplatte 5 bzw. 50 zum Spleissort S vorragen.

Die LID-Klappen 1 und 10, die an gegenüberliegenden Seiten des Spleissortes S außerhalb der Halteplatten 5 bzw. 50 angeordnet sind, sind um eine gemeinsame Drehachse 3 aus dem in der FIG 2 dargestellten geschlossenem Zustand in einen geöffneten Zustand nach oben verschwenkbar. Unterhalb der LID-Klappen 1 bzw. 10 befindet sich jeweils eine parallel zur Drehachse 3 verlaufende Nut, in die die Fasern F bzw. F0 eingelegt werden und die beim Schließen der LID-Klappen 1 bzw. 10 oberseitig verschlossen wird. Die LID-Klappen dienen zum Halten der Fasern F, F0 während der Messung der Spleissdämpfung.

Die Windschutzklappe 11 ist um eine Drehachse 12 verschwenkbar, wobei sie gemäß FIG 1 im geschlossenem Zustand die Halteplatten 5 und 50 überdeckt. Die Windschutzklappe 11 umfaßt eine nicht näher dargestellte Beleuchtungseinheit, die im geschlossenen Zustand der Windschutzklappe 11 den Spleissort S zur Erzeugung einer Abbildung der Faserenden auf dem Monitor 27 ausleuchtet. Die Drehachsen 3, 7 und 12 verlaufen parallel zueinander.

Die Halteklappen 5 und 50 weisen jeweils an der der Drehachse 7 abgewandten Seite ein vorstehendes, vorzugsweise plattenförmig ausgebildetes Einrastteil 9 bzw. 90 auf, das mit Hakenteilen 13 bzw. 130 zusammenwirken kann, die an der der Drehachse 12 abgewandten Seite der Windschutzklappe 11 angeordnet sind. Die Hakenteile 13 und 130 sind so gestaltet, dass sie beim Schliessen der Windschutzklappe 11 auffedern und die Einrastteile 9 bzw. 90 federnd hintergreifen, sodass die Halteklappen 5 und 50 beim Schliessen der Windschutzklappe 11 an die Bewegung derselben gekoppelt werden. Zweckmäßigerweise besitzen die Hakenteile 13, 130 das Auffedern an den Einrastteilen 9, 90 erleichternde Auffahrschrägen 8.

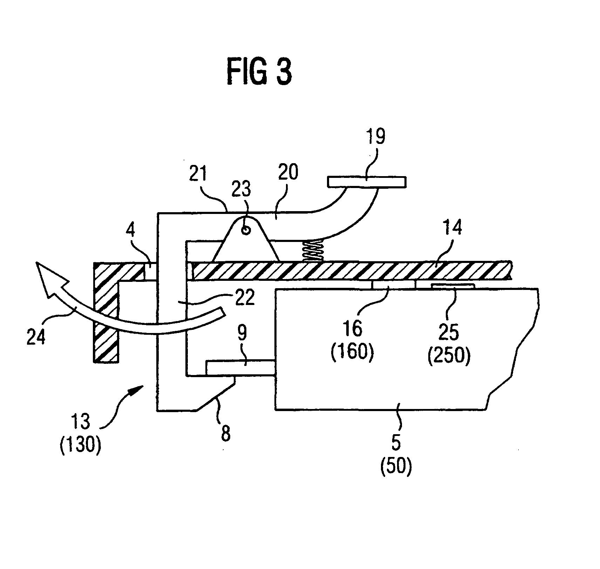

Eine beispielhafte Ausgestaltung der Hakenteile 13 bzw. 130 ist in der FIG 3 dargestellt. Demgemäß weist jedes Hakenteil 13, 130 ein im Ruhezustand senkrecht zur oberen Wand 14 der Windschutzklappe 11 durch eine Öffnung 4 der oberen Wand 14 nach unten verlaufendes Hakenelement 22 und ein oberhalb der oberen Wand 14 senkrecht zum Hakenelement 22 verlaufendes Hakenelement 20, das an seiner dem Hakenelement 22 abgewandten Seite eine Bedienungstaste 19 aufweist und um einen Drehpunkt 23 in einem Lagerteil 21 in Bezug auf die obere Wand 14 verschwenkbar ist (Pfeil 24). Die Hakenteile 13, 130 werden jeweils durch eine Druckfeder in die in der FIG 3 dargestellte Position vorgespannt, in der sie das Einrastteil 9 bzw. 90 untergreifen.

Jede Halteklappe 5, 50 weist an ihrer der LID-Klappe 1 bzw. 10 zugewandten Seite ein Mitnehmerteil 15 bzw. 150, vorzugsweise an der der Drehachse 7 abgewandten Seite, auf, das unter den dem Halteteil 5 bzw. 50 zugewandten Randbereich der LID-Klappe 1 bzw. 10 reicht, wobei die LID-Klappe 1 bzw. 10 in geschlossenem Zustand auf dem Mitnehmerteil 15 bzw. 150 aufliegt. Vorzugsweise weist das Mitnehmerteil 15 bzw. 150 die Form eines sich von der Halteklappe 5 bzw. 50 zur Seite erstreckenden Fingerteiles auf.

Da bei der bevorzugten Ausführungsform die Drehachse 12 der Windschutzklappe 11 oberhalb der Drehachse 7 der Halteklappen 5 und 50 angeordnet ist, kommt es beim Öffnen der Windschutzklappe 11 sowie der daran gekoppelten Halteklappen 5, 50 zu einer Relativverschiebung zwischen der Windschutzklappe 11 und den Halteklappen 5, 50, die schließlich dazu führt, dass die Hakenteile 13 und 130 nicht mehr die Einrastteile 9 bzw. 90 hintergreifen. Um dennoch eine Kopplung zwischen der Windschutzklappe 11 und den Halteklappen 5, 50 zu erreichen bzw. aufrecht zu erhalten, weist jede Halteklappe 5, 50 an ihrer der Windschutzklappe 11 zugewandten Seite einen Permanentmagneten 25 bzw. 250 auf, der mit einem Blechteil 16 bzw. 160 zusammenwirkt, das an der Innenseite der Windschutzklappe 11 vorgesehen ist (siehe Figur 3). Beim Öffnen wird dadurch sichergestellt, dass dann, wenn in Folge der angesprochenen Relativbewegung die Hakenteile 13, 130 soweit verschoben sind, dass sie die Einrastteile 9 bzw. 90 nicht mehr hintergreifen, der Permanentmagnet 25 bzw. 250 in den Bereich des Blechteiles 16 bzw. 160 verschoben ist, sodass die Kopplung zwischen der Windschutzklappe 11 und den Halteklappen 5, 50 durch die Haftung des Permanentmagneten 25 bzw. 250 am Blechteil 16 bzw. 160 gewährleistet wird. Umgekehrt gelangen in Folge der genannten Relativbewegung die Blechteile 16 bzw. 160 erst dann aus dem Bereich der Permanentmagneten 25 bzw. 250, wenn die Hakenteile 13 bzw. 130 die Einrastteile 9 bzw. 90 wieder hintergreifen.

Im folgenden wird die Funktion der vorliegenden Einrichtung zum automatischen Betätigen der Klappen des Spleissgerätes 2 näher erläutert. Dabei wird zunächst davon ausgegangen, dass eine Spleissoperation gerade durchgeführt wurde und dass gemäß FIG 1 die Windschutzklappe 11, die Halteklappen 5, 50 und die LID-Klappen 1, 10 geschlossen sind. Zum Entfernen der gerade verschweißten Fasern F, F0 und zur Vorbereitung einer nachfolgenden Schweißoperation wird die Windschutzhaube 11 manuell geöffnet, wobei wegen der Verriegelung der Hakenteile 13, 130 an den Einrastteilen 9 bzw. 90 und wegen der Haftung der Permanentmagnete 25, 250 an den Blechteilen 16, 160 sowie wegen der Auflage der LID-Klappen 1, 10 auf den Mitnehmerteilen 15 bzw. 150 auch die Klappen 1, 5, 10 und 50 automatisch zusammen mit der Windschutzklappe 11 geöffnet werden. Nach Entfernen der verschweißten Fasern können nun neue Fasern F, F0 in die Faserführungen unterhalb der Halteklappen 5, 50 eingesetzt werden. Zum Festspannen dieser Fasern F, F0 wird die Windschutzklappe 11 geschlossen, wobei dabei automatisch auch die Halteklappen 5, 50 zum Festspannen der Fasern F, F0 in den Faserführungen geschlossen werden und die Hakenteile 13, 130 hinter den Einrastteilen 9, 90 verriegelnd eingreifen. Die LID-Klappen 1 und 10 bleiben geöffnet und werden nach dem Einlegen der Fasern F, F0 in die den LID-Klappen 1, 10 zugeordneten Nuten separat zur Ausführung der Dämpfungsmessung geschlossen.

Es kann nun eine neue Spleissoperation ausgeführt werden.

Wenn nach dem Schließen der Windschutzklappe 11 festgestellt wird, dass eine der Fasern F, F0 sich nicht in der richtigen Lage befindet, kann durch Betätigen der entsprechenden Taste 19 des Hakenteiles 13 oder 130 die entsprechende Halteklappe 5 bzw. 50 zusammen mit der entsprechenden LID-Klappe 1 bzw. 10, die der richtig justierten Faser zugeordnet sind, von einer Öffnungsoperation entkoppelt werden, sodass dann nur zusammen mit der Windschutzklappe 11 die der nicht richtig justierten Faser zugeordnete Halteklappe 50 zusammen mit der entsprechenden LID-Klappe 10 geöffnet wird, um das Einlegen einer neuen Faser zu ermöglichen.

Mit der Hilfe der vorliegenden Einrichtung zur Klappenbetätigung können die folgenden Klappenbetätigungen ausgeführt werden.

Durch manuelles Anheben der Windschutzklappe 11 werden automatisch die Klappen 1, 5, 10, 50 geöffnet.

Durch manuelle Betätigung des linken Hakenteiles 13 (rechten Hakenteiles 130) und Anheben der Windschutzklappe 11 werden die Windschutzklappe 11 und die rechte Halteklappe 5 (linke Halteklappe 50) geöffnet.

Bei geöffneter Windschutzklappe 11 wird beim Öffnen der linken Halteklappe 5 (rechten Halteklappe 50) die linke LID-Klappe 1 (rechte LID-Klappe 10) automatisch geöffnet.

Die linke und rechte LID-Klappe 1 bzw. 10 können, wenn die ihnen zugeordneten Halteklappen 5 bzw. 50 geschlossen sind, separat manuell geöffnet werden.

Bei geöffneter Windschutzklappe 11 und geöffneten LID-Klappen 1, 10 kann die linke oder rechte Halteklappe 5 oder 50 manuell geschlossen werden.

Bei geöffneter Windschutzklappe 11 werden durch Schließen der linken oder rechten LID-Klappe 1 oder 10 automatisch auch die linke oder rechte Halteklappe 5 oder 50 geschlossen.

Beim manuellen Schließen der Windschutzklappe 11 werden automatisch die linke und rechte Halteklappe 5 und 50 geschlossen.

Es wird darauf hingewiesen, dass bekannterweise die Klappen 1, 5, 10 und 50 in ihren geschlossenen Zuständen durch Magneteinrichtungen in exakten Positionen gehalten werden.

Es wird ferner darauf hingewiesen, daß bei einer vereinfachten Form der vorliegenden Einrichtung die Mitnehmerteile 15, 150 entfallen können, so dass zwischen den LID-Klappen 1, 10 und den zugeordneten Halteklappen 5 bzw. 50 keine Kopplung besteht.

## Patentansprüche

1. Einrichtung zur Klappenbetätigung bei einem Lichtwellenleiter-Spleissgerät (2),
mit einer um eine erste Drehachse (12) zwischen einem geschlossenen Zustand und einem geöffneten Zustand drehbaren Windschutzklappe (11),
einer unter der Windschutzklappe (11) angeordneten und um eine zweite Drehachse (7) zwischen einem geschlossenen Zustand und einem geöffneten Zustand verschwenkbaren ersten Halteklappe (5) an einer Seite eines Spleissortes (S) und
einer unter der Windschutzklappe (11) angeordneten und um die zweite Drehachse (7) verschwenkbaren zweiten Halteklappe (50) an der anderen Seite des Spleissortes (S),
**dadurch gekennzeichnet, dass** die Windschutzklappe (11) eine erste Koppelungseinrichtung (13, 130) aufweist, durch die die erste Halteklappe (5) und/oder die zweite Halteklappe (50) an die Bewegung der Windschutzklappe (11) von dem geschlossenen Zustand in den geöffneten Zustand koppelbar sind und die erste Halteklappe (5) und/oder die zweite Halteklappe (50) frei schwenkbar sind, wenn sich die Windschutzklappe (11) in dem geöffneten Zustand befindet.

2. Einrichtung nach Anspruch 1,
**dadurch gekennzeichnet, dass** eine erste LID-Klappe (1), die um eine dritte Drehachse(3) zwischen einem geschlossenem Zustand und einem geöffneten Zustand drehbar und an der dem Spleissort (S) abgewandten Seite der ersten Halteklappe (5) angeordnet ist, und eine zweite LID-Klappe (10), die um die dritte Drehachse (3) zwischen einem geschlossenen Zustand und einem geöffneten Zustand drehbar und an der dem Spleissort (S) abgewandten Seite der zweiten Halteklappe (50) angeordnet ist, vorgesehen sind,
dass eine zweite Koppelungseinrichtung (15) vorgesehen ist, durch die die erste LID-Klappe (1) an die Bewegung der ersten Halteklappe (5) von dem geschlossenen Zustand in den geöffneten Zustand koppelbar ist, und
dass eine dritte Koppelungseinrichtung (150) vorgesehen ist, durch die die zweite LID-Klappe (10) an die Bewegung der zweiten Halteklappe (50) von dem geschlossenen Zustand in den geöffneten Zustand koppelbar ist.

3. Einrichtung nach Anspruch 1 oder 2,
**dadurch gekennzeichnet, dass** die erste Koppelungseinrichtung (13, 130) ein erstes Hakenteil (13) und ein zweites Hakenteil (130) aufweist,
wobei die Hakenteile (13, 130) an der Windschutzklappe (11) angeordnet sind,
wobei ein erstes Einrastteil (9) an der ersten Halteklappe (5) angeordnet ist und mit dem ersten Hakenteil (13) zusammenwirkt, und
wobei ein zweites Einrastteil (90) an der zweiten Halteklappe (50) angeordnet ist und mit dem zweiten Hakenteil (130) zusammenwirkt, derart,
dass das erste Hakenteil (13) bei der Bewegung der Windschutzklappe (11) von dem geöffneten Zustand in den geschlossenen Zustand am ersten Einrastteil (9) der ersten Halteklappe (5) verriegelnd einrastet und das zweite Hakenteil (130) bei der Bewegung der Windschutzklappe (11) von dem geöffneten Zustand in den geschlossenen Zustand verriegelnd an dem zweiten Einrastteil (90) der zweiten Halteklappe (50) eingreift.

4. Einrichtung nach Anspruch 3,
**dadurch gekennzeichnet, dass** das erste Hakenteil (13) und das zweite Hakenteil (130) durch eine Bedienungstaste (19) selektiv derart betätigbar sind, dass sie jeweils aus der das erste Einrastteil (9) bzw. das zweite Einrastteil (90) verriegelnden Position in die das erste Einrastteil (9) bzw. das zweite Einrastteil (90) freigebende Position bringbar sind.

5. Einrichtung nach einem der Ansprüche 2 bis 4, **dadurch gekennzeichnet, dass** die zweite Koppelungseinrichtung (15) die Form eines die erste LID-Klappe (1) in dem geschlossenen Zustand an der der ersten Halteklappe (5) zugewandten Seite untergreifenden Mitnehmerteiles aufweist, das an die erste Halteklappe (5) angeformt ist.

6. Einrichtung nach einem der Ansprüche 2 bis 5,
**dadurch gekennzeichnet, dass** die dritte Koppelungseinrichtung (150) die Form eines die zweite LID-Klappe (10) in dem geschlossenen Zustand an der der zweiten Halteklappe (50) zugewandten Seite untergreifenden Mitnehmerteiles aufweist, das an die zweite Halteklappe (50) angeformt ist.

7. Einrichtung nach einem der Ansprüche 1 bis 6,
**dadurch gekennzeichnet, dass** die zweite Drehachse (7) unterhalb der ersten Drehachse (12) angeordnet ist, so dass bei der gemeinsamen Bewegung der Windschutzklappe (11) und der ersten Halteklappe (5) und/oder der zweiten Halteklappe (50) aus den jeweils geschlossenen Zuständen zu den jeweils geöffneten Zuständen eine Relativbewegung zwischen der Windschutzklappe (11) und der ersten Halteklappe (5) und/oder der zweiten Halteklappe (50) auftritt, derart, dass das erste Hakenteil (13) und/oder das zweite Hakenteil (130) aus der am ersten Einrastteil (9) der ersten Halteklappe (5) bzw. am zweiten Einrastteil (90) der zweiten Halteklappe (50) einrastenden Position in die Freigabeposition gelangt, und
dass eine magnetisch wirkende Vorrichtung (16, 25; 160, 250) vorgesehen ist, die zwischen der Windschutzklappe (11) und der ersten Halteklappe (5) und/oder der zweiten Halteklappe (50) wirksam ist, um die erste Halteklappe (5) und/oder die zweite Halteklappe (50) an die Bewegung der Windschutzklappe (11) zu koppeln, bevor das erste Hakenteil (13) aus der Einrastposition am ersten Einrastteil (9) der ersten Halteklappe und/oder das zweite Hakenteil (130) aus der Einrastposition am zweiten Einrastteil (90) der zweiten Halteklappe (50) gelangt.

8. Einrichtung nach Anspruch 7,
**dadurch gekennzeichnet, dass** die magnetische wirkende Vorrichtung (16, 25, 160, 250) die Form eines an der ersten Halteklappe (5) und/oder an der zweiten Halteklappe (50) angeordneten Dauermagneten (25, 250) oder eines an der ersten Halteklappe (5) und/oder der zweiten Halteklappe (50) angeordneten Blechteiles aufweist, der bzw. das mit einem an der Windschutzklappe (11) angeordneten Blechteil (16, 160) oder einem an der Windschutzklappe (11) angeordneten Permanentmagneten zusammenwirkt,
wobei das Blechteil (16, 160) und der Dauermagnet (25, 250) bei der Bewegung der Windschutzklappe (11) und der ersten Halteklappe (5) und/oder der zweiten Halteklappe (50) von den geschlossenen Zuständen in die geöffneten Zustände zueinander bewegt werden und bei der Bewegung der Windschutzklappe (11) und der ersten Halteklappe (5) und/oder der zweiten Halteklappe (50) aus den geöffneten Zuständen in die geschlossenen Zustände voneinander weg bewegt werden.

## Claims

1. Device for flap operation in an optical waveguide splicer (2),
having a wind protection flap (11) which can rotate about a first rotation axis (12) between a closed state and an open state,
having a first holding flap (5), which is arranged under the wind protection flap (11) and can pivot about a second rotation axis (7) between a closed state and an open state, on one side of a splicing location (S), and
having a second holding flap (50), which is arranged under the wind protection flap (11) and can pivot about the second rotation axis (7), on the other side of the splicing location (S),
**characterized in that** the wind protection flap (11) has a first coupling device (13, 130), by means of which the first holding flap (5) and/or the second holding flap (50) can be coupled to the movement of the wind protection flap (11) from the closed state to the open state and the first holding flap (5) and/or the second holding flap (50) can pivot freely when the wind protection flap (11) is in the open state.

2. Device according to Claim 1,
**characterized in that** a first LID flap (1), which is arranged such that it can rotate about a third rotation axis (3) between a closed state and an open state and is arranged on the side of the first holding flap (5) facing away from the splicing location (S), and a second LID flap (10), which is arranged such that it can rotate about the third rotation axis (3) between a closed state and an open state and is arranged on the side of the second holding flap (50) facing away from the splicing location (S), are provided,
**in that** a second coupling device (15) is provided, by means of which the first LID flap (1) can be coupled to the movement of the first holding flap (5) from the closed state to the open state, and
**in that** a third coupling device (150) is provided, by means of which the second LID flap (10) can be coupled to the movement of the second holding flap (50) from the closed state to the open state.

3. Device according to Claim 1 or 2,
**characterized in that** the first coupling device (13, 130) has a first hook part (13) and a second hook part (130),
with the hook parts (13, 130) being arranged on the wind protection flap (11),
with a first latching-in part (9) being arranged on the first holding flap (5) and interacting with the first hook part (13), and
with a second latching-in part (90) being arranged on the second holding flap (50) and interacting with the second hook part (130), such
that the first hook part (13) latches in on the first latching-in part (9) of the first holding flap (5), such that it is locked, when the wind protection flap (11) moves from the open state to the closed state, and the second hook part (130) engages on the second latching-in part (90) of the second holding flap (50), such that it is locked, when the wind protection flap (11) moves from the open state to the closed state.

4. Device according to Claim 3,
**characterized in that** the first hook part (13) and the second hook part (130) can be operated selectively by means of an operating button (19), such that they can in each case be moved from the position in which the first latching-in part (9) and the second latching-in part (90) are locked, to the position in which the first latching-in part (9) and the second latching-in part (90) are released.

5. Device according to one of Claims 2 to 4,
**characterized in that** the second coupling device (15) is in the form of a driver part whose side which faces the first holding flap (5) engages under the first LID flap (1) in the closed state, and which is integrally formed on the first holding flap (5).

6. Device according to one of Claims 2 to 5,
**characterized in that** the third coupling device (150) is in the form of a driver part whose side which faces the second holding flap (50) engages under the second LID flap (10) in the closed state, and which is integrally formed on the second holding flap (50).

7. Device according to one of Claims 1 to 6,
**characterized in that** the second rotation axis (7) is arranged underneath the first rotation axis (12), such that, during the joint movement of the wind protection flap (11) and of the first holding flap (5), and/or of the second holding flap (50), from the respectively closed states to the respectively open states, a relative movement takes place between the wind protection flap (11) and the first holding flap (5), and/or the second holding flap (50), such that the first hook part (13) and/or the second hook part (130) moves from the position in which it is latched on the first latching-in part (9) of the first holding flap (5) and/or on the second latching-in part (90) of the second holding flap (50), to the release position, and
**in that** a magnetically acting apparatus (16, 25; 160, 250) is provided, which acts between the wind protection flap (11) and the first holding flap (5) and/or the second holding flap (50), in order to couple the first holding flap (5) and/or the second holding flap (50) to the movement of the wind protection flap (11), before the first hook part (13) moves from the latching-in position on the first latching-in part (9) of the first holding flap and/or the second hook part (130) moves from the latching-in position on the second latching-in part (90) of the second holding flap (50).

8. Device according to Claim 7,
**characterized in that** the magnetically acting apparatus (16, 25, 160, 250) is in the form of a permanent magnet (25, 250), which is arranged on the first holding flap (5) and/or on the second holding flap (50), or is in the form of a sheet-metal part which is arranged on the first holding flap (5) and/or on the second holding flap (50), which permanent magnet or sheet-metal part respectively interacts with a sheet-metal part (16, 160) which is arranged on the wind protection flap (11), or with a permanent magnet which is arranged on the wind protection flap (11),
with the sheet-metal part (16, 160) and the permanent magnet (25, 250) being moved toward one another during the movement of the wind protection flap (11) and of the first holding flap (5) and/or of the second holding flap (50) from the closed states to the open states, and being moved away from one another during the movement of the wind protection flap (11) and of the first holding flap (5) and/or of the second holding flap (50) from the open states to the closed states.

## Revendications

1. Dispositif permettant d'actionner les volets d'un appareil d'épissure (2) de guides d'ondes optiques,
doté d'un volet pare-vent (11) mobile autour d'un premier axe de révolution (12) entre un état fermé et un état ouvert,
d'un premier volet de maintien (5) agencé sous le volet pare-vent (11) et pivotable autour d'un deuxième axe de révolution (7) entre un état fermé et un état ouvert sur un côté d'un lieu d'épissure (S) et d'un deuxième volet de maintien (50) agencé sous le volet pare-vent (11) et pivotable autour du deuxième axe de révolution (7) sur l'autre côté du lieu d'épissure (S),
**caractérisé en ce que** le volet pare-vent (11) présente un premier dispositif de couplage (13, 130) grâce auquel le premier volet de maintien (5) et/ou le deuxième volet de maintien (50) peuvent être couplés au mouvement du volet pare-vent (11) de l'état fermé à l'état ouvert et le premier volet de maintien (5) et/ou le deuxième volet de maintien (50) peuvent pivoter librement lorsque le volet pare-vent (11) est à l'état ouvert.

2. Dispositif selon la revendication 1,
**caractérisé en ce qu'**il est prévu un premier volet LID (1) mobile autour d'un troisième axe de révolution (3) entre un état fermé et un état ouvert et agencé sur le coté détourné du lieu d'épissure (S) du premier volet de maintien (5) et un deuxième volet LID (10) mobile autour du troisième axe de révolution (3) entre un état fermé et un état ouvert et agencé sur le coté détourné du lieu d'épissure (S) du deuxième volet de maintien (50),
**en ce qu'**il est prévu un deuxième dispositif de couplage (15) grâce auquel le premier volet LID (1) peut être couplé au mouvement du premier volet de maintien (5) de l'état fermé à l'état ouvert, et
**en ce qu'**il est prévu un troisième dispositif de couplage (150) grâce auquel le deuxième volet LID (10) peut être couplé au mouvement du deuxième volet de maintien (50) de l'état fermé à l'état ouvert.

3. Dispositif selon la revendication 1 ou 2,
**caractérisé en ce que** le premier dispositif de couplage (13, 130) présente une première pièce à crochet (13) et une deuxième pièce à crochet (130),
lesdites pièces à crochet (13, 130) étant placées sur le volet pare-vent (11),
une première pièce à encliqueter (9) étant placée sur le premier volet de maintien (5) et coopérant avec la première pièce à crochet (13) et
une deuxième pièce à encliqueter (90) étant placée sur le deuxième volet de maintien (50) et coopérant avec la deuxième pièce à crochet (130) de telle sorte que
la première pièce à crochet (13) s'encliquette avec verrouillage sur la première pièce à encliqueter (9) du premier volet de maintien (5) lors du mouvement du volet pare-vent (11 ) de l'état ouvert à l'état fermé et la deuxième pièce à crochet (130) s'encliquette avec verrouillage sur la deuxième pièce à encliqueter (90) du deuxième volet de maintien (50) lors du mouvement du volet pare-vent (11) de l'état ouvert à l'état fermé.

4. Dispositif selon la revendication 3,
**caractérisé en ce que** la première pièce à crochet (13) et la deuxième pièce à crochet (130) sont sélectivement actionnables par une touche de commande (19) de manière à pouvoir être amenées à chaque fois de la position verrouillant la première pièce à encliqueter (9) resp. la deuxième pièce à encliqueter (90) à la position libérant la première pièce à encliqueter (9) resp. la deuxième pièce à encliqueter (90).

5. Dispositif selon l'une des revendications 2 à 4,
**caractérisé en ce que** le deuxième dispositif de couplage (15) présente la forme d'une pièce d'entraînement qui s'accroche sous le premier volet LID (1) à l'état fermé sur le côté tourné vers le premier volet de maintien (5) et qui est formée sur le premier volet de maintien (5).

6. Dispositif selon l'une des revendications 2 à 5,
**caractérisé en ce que** le troisième dispositif de couplage (150) présente la forme d'une pièce d'entraînement qui s'accroche sous le deuxième volet LID (10) à l'état fermé sur le côté tourné vers le deuxième volet de maintien (50) et qui est formée sur le deuxième volet de maintien (50).

7. Dispositif selon l'une des revendications 1 à 6,
**caractérisé en ce que** le deuxième axe de révolution (7) est agencé au-dessous du premier axe de révolution (12) de façon à obtenir, lors du mouvement conjoint du volet pare-vent (11) et du premier volet de maintien (5) et/ou du deuxième volet de maintien (50) des états à chaque fois fermés aux états à chaque fois ouverts, un mouvement relatif entre le volet pare-vent (11) et le premier volet de maintien (5) et/ou le deuxième volet de maintien (50) de manière que la première pièce à crochet (13) et/ou la deuxième pièce à crochet (130) parvienne de la position de verrouillage sur la première pièce à encliqueter (9) du premier volet de maintien (5) resp. sur la deuxième pièce à encliqueter (90) du deuxième volet de maintien (50) à la position de libération, et
**en ce qu'**il est prévu un dispositif à effet magnétique (16, 25 ; 160, 250) qui agit entre le volet pare-vent (11) et le premier volet de retenu (5) et/ou le deuxième volet de maintien (50) de manière à coupler le premier volet de retenu (5) et/ou
le deuxième volet de maintien (50) au mouvement du volet pare-vent (11 ) avant que la première pièce à crochet (13) ne quitte la position de verrouillage sur la première pièce à encliqueter (9) du premier volet de maintien et/ou la deuxième pièce à crochet (130) ne quitte la position de verrouillage sur la deuxième pièce à encliqueter (90) du deuxième volet de maintien (50).

8. Dispositif selon la revendication 7,
**caractérisé en ce que** le dispositif à effet magnétique (16, 25, 160, 250) présente la forme d'un aimant permanent (25, 250) placé sur le premier volet de maintien (5) et/ou sur le deuxième volet de maintien (50) ou d'une pièce de tôle placée sur le premier volet de maintien (5) et/ou sur le deuxième volet de maintien (50), qui coopère avec une pièce de tôle (16, 160) placée sur le volet pare-vent (11 ) ou avec un aimant permanent placé sur le volet pare-vent (11), la pièce de tôle (16, 160) et l'aimant permanent (25, 250) étant rapprochés l'un de l'autre lors du mouvement du volet pare-vent (11) et du premier volet de maintien (5) et/ou du deuxième volet de maintien (50) des états fermés aux états ouverts et étant éloignés l'un de l'autre lors du mouvement du volet pare-vent (11) et du premier volet de maintien (5) et/ou du deuxième volet de maintien (50) des états ouverts aux états fermés.
